Europäisches Patentamt

European Patent Office

Office européen des brevets

(19)

(11) Numéro de publication : **0 390 843 B1**

(12) **FASCICULE DE BREVET EUROPEEN**

(45) Date de publication du fascicule du brevet :
04.03.92 Bulletin 92/10

(51) Int. Cl.⁵ : **B60C 23/04, G08C 19/24**

(21) Numéro de dépôt : **89900614.2**

(22) Date de dépôt : **14.12.88**

(86) Numéro de dépôt international :
**PCT/FR88/00613**

(87) Numéro de publication internationale :
**WO 89/05738 29.06.89 Gazette 89/14**

(54) **CODAGE DE LA VALEUR DE PLUSIEURS GRANDEURS MESUREES DANS UN PNEUMATIQUE.**

(30) Priorité : **18.12.87 FR 8717864**

(43) Date de publication de la demande :
**10.10.90 Bulletin 90/41**

(45) Mention de la délivrance du brevet :
**04.03.92 Bulletin 92/10**

(84) Etats contractants désignés :
**AT BE CH DE FR GB IT LI LU NL SE**

(56) Documents cités :
**EP-A- 0 162 990**
**WO-A- 87/00127**
**FR-A- 2 500 926**
**FR-A- 2 551 556**
**US-A- 4 695 823**

(56) Documents cités :
**Patent Abstracts of Japan, vol. 8, no 148(M-308) (1585), 11 Juillet 1984, & JP,A,5945205 (SUMITOMO DENKI KOGYO K.K.) 14 Mars 1984**

(73) Titulaire : **COMPAGNIE GENERALE DES ETABLISSEMENTS MICHELIN-MICHELIN & CIE**
**4, rue du Terrail**
**F-63000 Clermont-Ferrand (FR)**

(72) Inventeur : **DOSJOUB, André**
**20 bis, rue Ernest-Renan**
**F-63400 Chamalières (FR)**

(74) Mandataire : **Bauvir, Jacques et al**
**Michelin & Cie Service K. Brevets**
**F-63040 Clermont-Ferrand Cédex (FR)**

Jouve, 18, rue Saint-Denis, 75001 PARIS

## Description

La présente invention concerne les dispositifs de surveillance des pneumatiques. Plus particulièrement, elle se rapporte au codage permettant la transmission de la valeur de plusieurs grandeurs mesurées par le biais d'une seule voie de transmission entre la roue portant le pneumatique, mobile en rotation, et le châssis ou organe de support, non mobile en rotation.

La demande de brevet WO87/00127 propose un type de codage permettant la transmission de la pression du pneumatique et de sa température. Les mesures des grandeurs observées (pression, température) sont codées en intervalles de temps.

Le fonctionnement de la plupart des dispositifs électroniques est susceptible de dériver dans le temps, par le vieillissement des composants, par l'effet de la température sur le fonctionnement de ceux-ci, ou par d'autres influences perturbatrices. Les précautions classiques pour lutter contre ces dérives augmentent généralement le coût, l'encombrement, la consommation des circuits. Or dans cette application, ces défauts sont rédhibitoires.

L'objectif de l'invention est de s'affranchir de ces dérives non pas en les supprimant ou en les limitant, mais en envoyant une information image de la dérive en sus des informations recherchées, ce qui permet après coup de retirer l'effet des dérives sur ces informations.

Dans un autre objectif, l'invention propose un codage qui permette de transmettre la valeur d'un nombre quelconque de grandeurs observées sur une roue.

Selon l'invention, le dispositif de codage de la valeur de n grandeurs mesurées sur un pneumatique, permettant la transmission desdites valeurs vers le châssis portant ledit pneumatique, est caractérisé en ce qu'il comprend

– des moyens permettant de repérer le départ du cycle de mesure,

– un générateur délivrant un signal cyclique en forme de rampe,

– n moyens sensibles chacuns à l'une desdites grandeurs, délivrant chacun, à tout moment, un signal fonction de la valeur de ladite grandeur à laquelle il est sensible,

– un élément délivrant une valeur de référence correspondant à la fin du cycle de mesure,

– n+1 détecteurs de coïncidence recevant à l'une de leurs deux entrées ledit signal en forme de rampe, et délivrant un signal haut lorsque les signaux à leurs deux entrées sont identiques, et un signal bas à tout autre moment, ladite autre entrée recevant

. pour le premier détecteur de coïncidence la valeur de sortie de l'un des moyens sensibles auxdites grandeurs,

. pour le dernier détecteur de coïncidence ladite valeur de référence

. pour les n-1 détecteurs de coïncidence restants la valeur de sortie d'un sommateur, effectuant la somme de la valeur en entrée du détecteur de coïncidence précédant et la valeur de sortie de l'un des n moyens sensibles auxdites grandeurs.

Le cycle de mesure commence par le démarrage du signal rampe. Si on pose que les grandeurs observées vallent $x_i$ (i variant de 1 à n), grâce aux détecteurs de coïncidence, chaque valeur $x_i$ sera codée par une période de temps $T_i$. Le premier détecteur de coïncidence délivrera une impulsion à la fin de la période de temps $T_1$ codant la valeur $x_1$ de la première grandeur observée. De par l'emploi d'un sommateur, le second détecteur de coïncidence délivrera une impulsion à la fin d'une période de temps $T_1 + T_2$ (comptée à partir du départ de la rampe), $T_2$ codant la valeur $x_2$ de la seconde grandeur observée. Et ainsi du suite jusqu'à $T_n$ codant $x_n$. On choisit la valeur de référence de telle sorte que le dernier détecteur délivre une impulsion après une période $T_{n+1}$ qui soit, dans le cas le plus défavorable, toujours supérieure à $T_i$. On entend par cas le plus défavorable le cas où toutes les périodes $T_i$ sont les plus longues, compte tenu de la valeur des grandeurs observées et du mode de codage. Cette dernière impulsion autorise également le départ d'un nouveau cycle de mesure, le cas échéant après un retard.

Les périodes $T_i$ sont donc fonction des valeurs $x_i$ dont on souhaite disposer, après décodage, à bord d'un véhicule. Mais elles sont également chacune fonction d'influences parasites (vieillissement, température, ...) parce que les périodes $T_i$ dépendent aussi de la pente de la rampe à laquelle sont comparées les différentes valeurs. Grâce audit élément de référence, l'image de toutes les perturbations est donnée par $T_{n+1}$, permettant de connaître l'angle de la rampe. Chaque valeur $x_i$ est une fonction du rapport de périodes comme suit : $x_i = f(\dfrac{T_i}{T_{n+1}})$. Comme chaque valeur est codée par un rapport d'intervalles de temps, la fluctuation de ceux-ci est sans influence si elle est identique. Or, dans un tel circuit de codage, le point le plus critique est la réalisation de la rampe, et plus particulièrement le condensateur fixant la constante de temps permettant d'obtenir cette rampe. Le vieillissement, ou en général, la dérive du condensateur aura la même influence sur les périodes $T_i$ et sur la période $T_{n+1}$. Dès lors, la précision de la mesure est conservée malgré les dérives.

Quel que soit le nombre de grandeurs observées, il suffit d'une valeur de référence. Dans une réalisation analogique, c'est une tension de référence, et dans une réalisation digitale, c'est la valeur d'un compteur, ce qui peut être réalisé de façon économique. Dans une réalisation digitale encore, l'obtention d'une rampe fait appel à un oscillateur. On peut utiliser un quartz, qui est stable mais coûteux, ou bien un circuit du type 555, dont la période est réglée par le choix d'une résistance et d'un condensateur. Là encore, la dérive du condensateur et/ou de la résistance restera sans effet sur la précision des mesures.

Les figures suivantes illustrent une application de l'invention à la mesure de la pression et de la température dans un pneumatique.

La figure 1 illustre une réalisation analogique.

La figure 2 reprend les chronogrammes des principaux signaux.

La figure 3 illustre une réalisation digitale pour le même principe de codage.

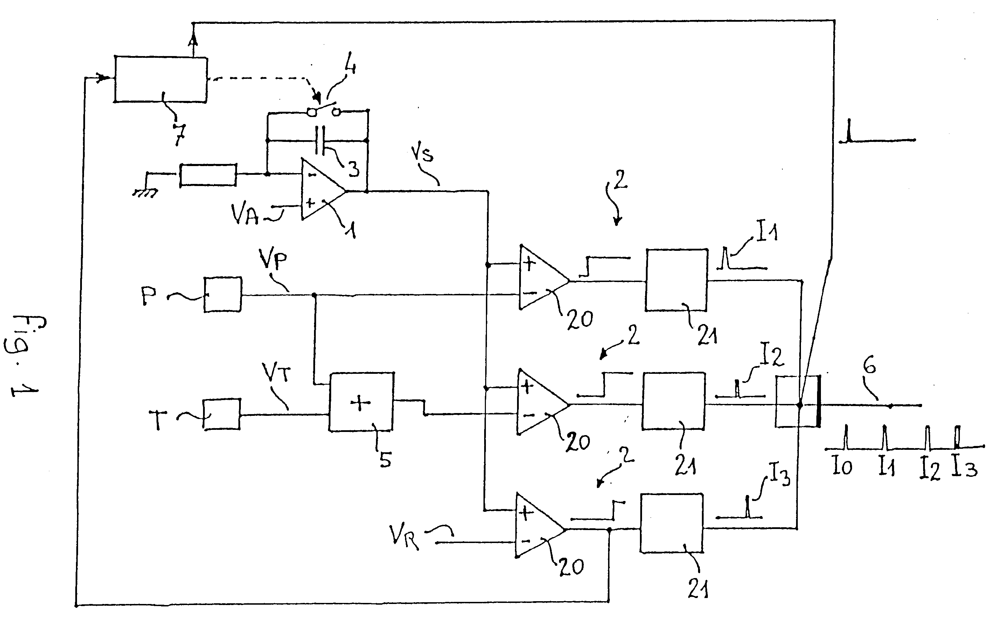

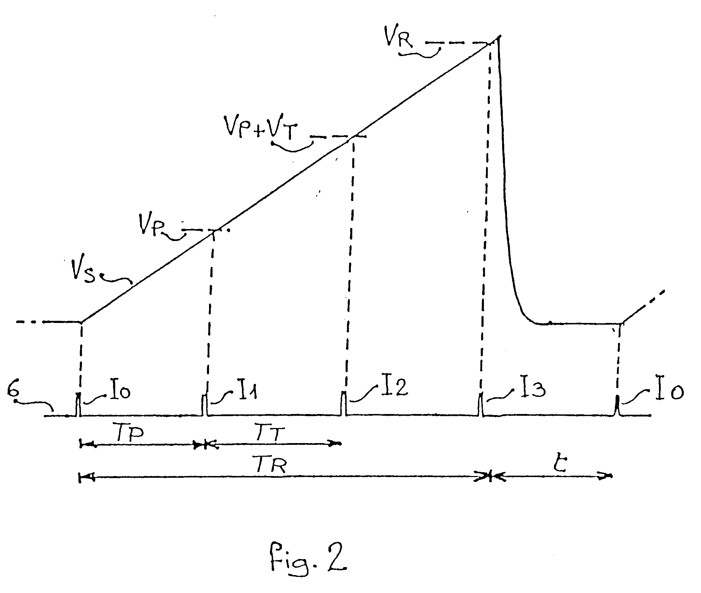

La figure 1 schématise un circuit analogique réalisant l'invention pour le codage de la pression et de la température relevés dans un pneumatique. On voit un amplificateur opérationnel 1 monté en intégrateur, connecté à trois détecteurs de coïncidence analogiques 2. Au départ du cycle de mesure, le condensateur 3 est déchargé (schématisé par l'interrupteur 4). L'intégrateur 1 délivre un signal $V_S$ en forme de rampe croissante, ce que l'on aperçoit à la figure 2.

Les moyens sensibles à la pression P délivrent une tension $V_p$ fonction de celle-ci. Cette tension est appliquée à la seconde entrée du premier détecteur de coïncidence 2 et simultanément au sommateur analogique 5. Les moyens sensibles à la température T délivre une tension $V_T$ fonction de celle-ci, laquelle est appliquée au sommateur 5. Sur la figure 2, on voit les niveaux de tension $V_p$ et $V_p + V_T$, ainsi que la tension de référence $V_R$. On comprend aisément que, grâce aux trois détecteurs de coïncidence 2, il est très facile d'envoyer sur la ligne de sortie 6 du dispositif de codage les impulsions $I_1$, $I_2$, $I_3$ correspondant à l'intersection des niveaux de tension $V_p$, $V_p + V_T$, $V_R$ avec la rampe $V_S$. Il suffit pour cela d'utiliser des comparateurs analogiques 20 et d'insérer, en sortie de chaque comparateur analogique 20, un dérivateur 21 transformant un échelon en impulsion. On obtient de la sorte des périodes de temps $T_p$, $T_T$ et $T_R$ correspondant aux périodes $T_i$ pour i = 1 et i = 2 et $T_{n+1}$ de l'exposé général ci-dessus. De plus, le basculement du troisième détecteur de coïncidence 2 actionne, par le biais d'un circuit séquentiel 7, l'interrupteur 4 électronique qui décharge le condensateur 3. Après un certain temps t, le condensateur 3 étant parfaitement déchargé, le circuit séquentiel 7 envoie une impulsion $I_o$ sur la ligne de sortie 6 au même moment où il ouvre l'interrupteur 4, ce qui permet de repérer le départ d'un cycle de mesure.

Les tensions $V_A$ (à l'entrée non inverseuse de l'amplificateur opérationnel 1), $V_p$, $V_T$ et $V_R$ sont toutes proportionnelles à la tension d'alimentation du circuit. Bien sûr, comme déjà exposé ci-dessus, des tensions $V_p$ et $V_T$ sont en plus fonction respectivement de la pression et de la température mesurées. Ainsi, une fluctuation de la tension d'alimentation influence de la même façon chacune des périodes $T_i$ et la période $T_{n+1}$, ce qui reste donc sans influence sur la précision des mesures.

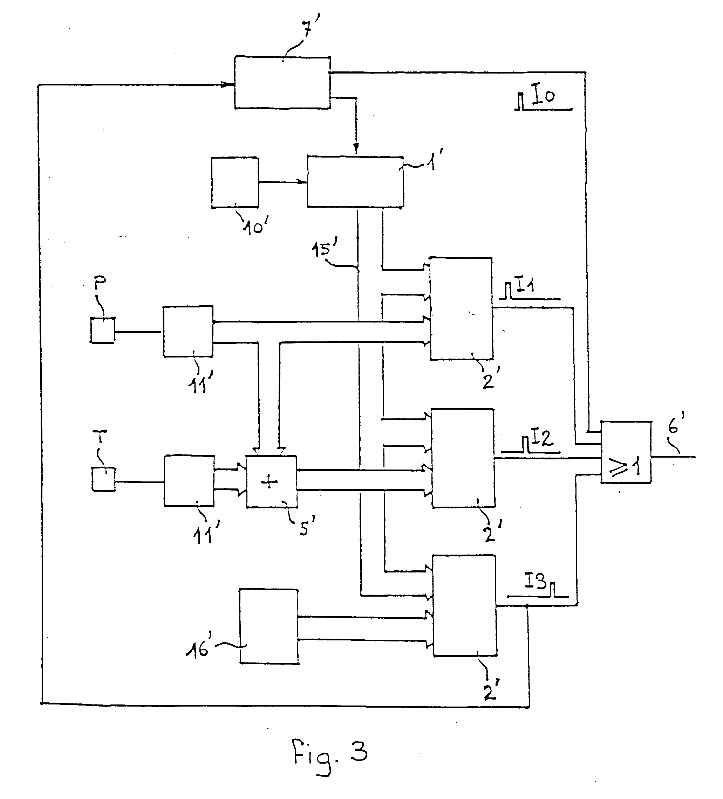

La figure 3 schématise une réalisation digitale procédant du même principe. La rampe est ici constituée par un compteur 1' piloté par une oscillateur 10'. Les sorties des capteur de pression P et sonde de température T sont appliquées à des convertisseurs analogique/numérique 11'. La valeur du compteur 1' croît constamment jusqu'à une remise à zéro déclenchée par le dernier détecteur de coïncidence 2' via le circuit séquentiel 7' (franchissement de la valeur de référence). La remise à zéro terminée, le même circuit séquentiel 7', envoie une impulsion $I_o$ sur la ligne de sortie 6'. La valeur instantanée du compteur 1' est transmise par un bus 15' aux trois détecteurs de coïncidence 2' numériques. D'autre part et de manière analogue à ce qui a été exposé ci-dessus, ceux-ci reçoivent respectivement la valeur numérique correspondant à la pression et la somme des valeurs numériques correspondant à la pression et à la température, ainsi que pour le dernier une valeur de référence fixe enregistrée en mémoire 16'. Pour le reste, le fonctionnement est similaire. Notamment, l'exploitation ou décodage d'un signal délivré par les deux dispositifs est identique.

**Revendications**

1. Dispositif de codage de la valeur de n grandeurs mesurées sur un pneumatique, permettant la transmission desdites valeurs vers le châssis portant ledit pneumatique, caractérisé en ce qu'il comprend
   – des moyens permettant de repérer le départ du cycle de mesure,
   – un générateur délivrant un signal cyclique de référence en forme de rampe,
   – n moyens sensibles chacun à l'une desdites grandeurs, délivrant, chacun, à tout moment, un signal fonction de la valeur de ladite grandeur à laquelle il est sensible,
   – un élément délivrant une valeur de référence choisie d'avance pour correspondre à la fin du cycle de mesure,
   – n+1 détecteurs de coïncidence (2, 2') recevant à l'une de leurs deux entrées ledit signal en forme de rampe, et délivrant un signal haut lorsque les signaux à leurs deux entrées sont identiques, et un signal bas à toute autre moment,
   ladite autre entrée recevant
      . pour le premier détecteur de coïncidence (2, 2') la valeur de sortie de l'un des moyens sensibles auxdites grandeurs,
      . pour le dernier détecteur de coïncidence (2, 2') ladite valeur de référence
      . pour les n-1 détecteurs de coïncidence (2, 2') restants la valeur de sortie d'un sommateur (5, 5′) , effectuant la somme de la valeur en entrée du détecteur de coïncidence précédant et la valeur de sortie de l'un des n moyens sensibles auxdites grandeurs.

2. Dispositif selon la revendication 1 caractérisé en ce que ledit générateur est constitué essentiellement par un amplificateur opérationnel (1) monté en intégrateur,

en ce que lesdits détecteurs de coïncidence (2) comportent essentiellement un comparateur (20) analogique, suivi d'un dérivateur (21),

en ce que ledit signal délivré par les moyens sensibles auxdites grandeurs est une tension électrique ($V_p$, $V_T$) et en ce que ledit élément délivrant une valeur de référence est un élément délivrant une tension électrique ($V_R$).

3. Dispositif selon la revendication 1 caractérisé en ce que ledit générateur est essentiellement constitué par un oscillateur (10′), suivi d'un compteur (1′),

en ce que lesdits détecteurs de coïncidence (2′) sont numériques,

en ce que ledit signal délivré par les moyens sensibles auxdites grandeurs est numérique,

et en ce que ledit élément délivrant une valeur de référence est un nombre enregistré dans une mémoire (16′).

4. Dispositif selon la revendication 3 caractérisé en ce que ledit oscillateur (10′) est constitué essentiellement par un circuit dont la période est réglée par le choix d'une résistance et d'un condensateur.

**Claims**

1. Device for coding the value of n quantities measured on a tire, making possible the transmission of said values to the frame carrying said tire, characterized in that it comprises
   – means making it possible to mark the start of the measuring cycle,
   – a generator delivering a cyclical reference signal in ramp form,
   – n means each sensitive to one of said quantities, each constantly delivering a signal as a function of the value of said quantity to which it is sensitive,
   – an element delivering a reference value selected in advance to correspond to the end of the measuring cycle,
   – n + 1 coincidence detectors (2, 2′) receiving, at one of their two inputs, said signal in ramp form, and delivering a high signal when the signals at their two inputs are identical, and a low signal at any other time,
   said other input receiving
      . for first coincidence detector (2, 2′), the output value of one of the means sensitive to said quantities,

      . for last coincidence detector (2, 2′), said reference value,

      . for remaining n - 1 coincidence detectors (2, 2′), the output value of a summation device (5, 5′), working out the sum of the input value of the preceding coincidence detector and the output value of one of n means sensitive to said quantities.

2. Device according to claim 1, wherein said generator essentially consists of an operational amplifier (1) mounted as an integrator,
   wherein said coincidence detectors (2) essentially comprise an analog comparator (20), followed by a shunting device (21),
   wherein said signal delivered by the means sensitive to said quantities is an electric voltage ($V_P$, $V_T$),
   and wherein said element delivering a reference value is an element delivering an electric voltage ($V_R$).

3. Device according to claim 1, wherein said generator essentially consists of an oscillator (10′), followed by a counter (1′),
   wherein said coincidence detectors (2′) are digital,
   wherein said signal delivered by the means sensitive to said quantities is digital,
   and wherein said element delivering a reference value is a number recorded in a memory (16′).

4. Device according to claim 3, wherein said oscillator (10′) essentially consists of a circuit whose period is regulated by the selection of a resistor and a capacitor.

**Patentansprüche**

1. Kodiervorrichtung für die Werte von n auf einem Luftreifen gemessenen Größen, die die Übertragung dieser Werte zum Fahrgestell, das diesen Luftreifen trägt, erlaubt, dadurch gekennzeichnet, daß sie umfaßt:
   – Mittel, die es erlauben, den Start des Meßzyklus festzustellen,
   – einen Generator, der ein zyklisches Signal in Rampenform abgibt,
   – n Mittel, von denen jeweils eines für eine der Größen empfindlich ist, wobei jedes während der gesamten Zeit ein Signal abgibt, das eine Funktion des Wertes der Größe ist, für die es empfindlich ist,
   – ein Element, das einen Referenzwert abgibt, der dem Ende des Meßzyklus entspricht,
   – n+1 Koinzidenzdetektoren, die an einem ihrer beiden Eingänge das Rampensignal aufnehmen und ein Hoch-Signal abgeben, wenn die Signale an ihren beiden Eingängen identisch sind und ein Tief-Signal zu jedem anderen Zeitpunkt, wobei der andere Eingang aufnimmt:
      . beim ersten Koinzidenzdetektor den Wert des Ausganges eines der auf die Größen sensiblen Mittels,

. beim letzten Koinzidenzdetektor den Referennzwert,

. bei den verbleibenden n-1 Koinzidenzdetektoren den Ausgangswert eines Summierers, der die Summe des Eingangswertes des vorhergehenden Koinzidenzdetektoreinganges und des Ausgangswertes eines der n für die Größen sensiblen Mittel bildet.

2. Vorrichtung nach Anspruch 1, dadurch gekennzeichnet, daß der Generator im wesentlichen aus einem Operationsverstärker (1) besteht, der integrierend arbeitet und dadurch,

daß die Koinzidenzdetektoren (2) im wesentlichen analoge Vergleicher V (20), gefolgt von einem Ableiter (21) umfassen, und dadurch,

daß das Signal, das durch die Mittel abgegeben wird, die auf die Größen empfindlich sind, eine elektrische Spannung ($V_P$, $V_T$) ist und dadurch,

daß das Element, das einen Referenzwert abgibt, ein Element ist, das eine elektrische Spannung ($V_R$) abgibt.

3. Vorrichtung nach Anspruch 1, dadurch gekennzeichnet, daß der Generator im wesentlichen aus einem Oszillator (10'), gefolgt von einem Zähler (1') besteht und

daß die Koinzidenzdetektoren (2') digital arbeiten, und dadurch,

daß das von den Mitteln, die für die Größen empfindlich sind, abgegebene Signal in digitaler Form abgegeben wird, und dadurch,

daß das Element, das einen Referenzwert abgibt, eine Zahl ist, die in einem Speicher (16') gespeichert ist.

4. Vorrichtung nach Anspruch 3, dadurch gekennzeichnet, daß der Oszillator (10') im wesentlichen aus einem Schaltkreis besteht, dessen Periode durch die Wahl eines Widerstandes und eines Kondensators geregelt ist.

Fig. 1

Fig. 2

Fig. 3